# EUROPEAN PATENT APPLICATION

(11) **EP 1 698 243 A1**
(43) Date of publication of application: **06.09.2006**
(21) Application number: 05012837.0
(22) Date of filing: 15.06.2005
(51) Int. Cl.: A41D 19/015, A47J 17/02, A22C 25/02

(54) **Glove for the cleaning of scales of a fish and mussels in general**

(30) Priority: 03.03.2005 IT BO20050115
(71) Applicant: Frallonardo, Vito, 41018 San Cesario sul Panaro (Modena) (IT)
(72) Inventor: Frallonardo, Vito, 41018 San Cesario sul Panaro (Modena) (IT)
(74) Representative: Paolini, Elena

(57) **Abstract**

It consists of a glove (1), in rubber or waterproofed tissue on.all or part of the glove, on which, with sticking, thermosewing or similar systems, a tissue (2) in cotton with base in polyester is applied, shaped in form (3) having the imprint of an opened hand. Said tissue (2) has an inseparable upper layer, made by means of laser or particular glues, of siliceous dust (4), silicon dust (4) and aluminium oxide dust (6) so to form a sole body with the tissue (2) having flexibility.

## Description

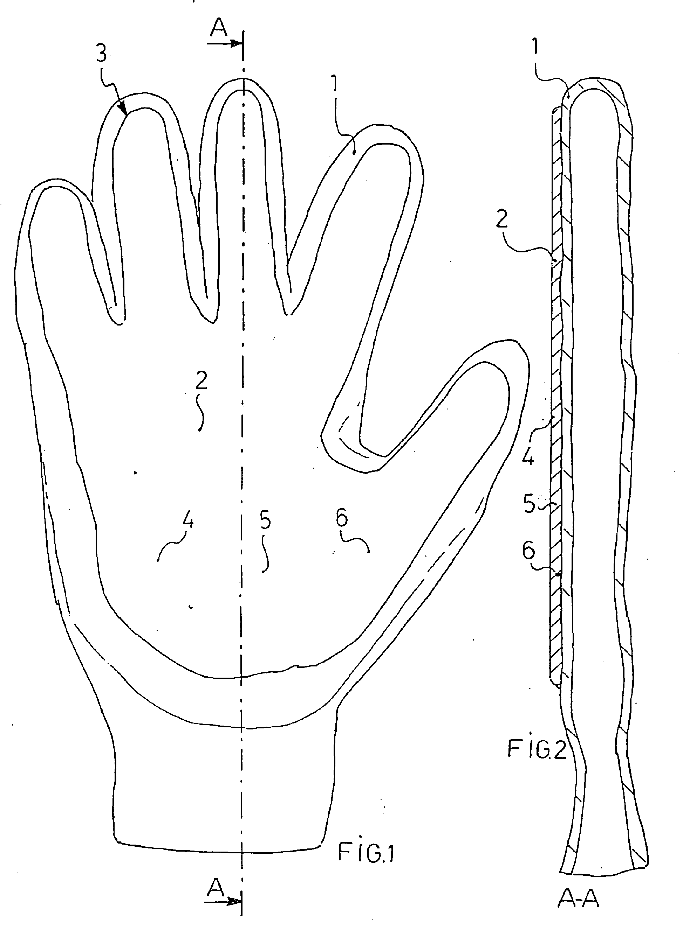

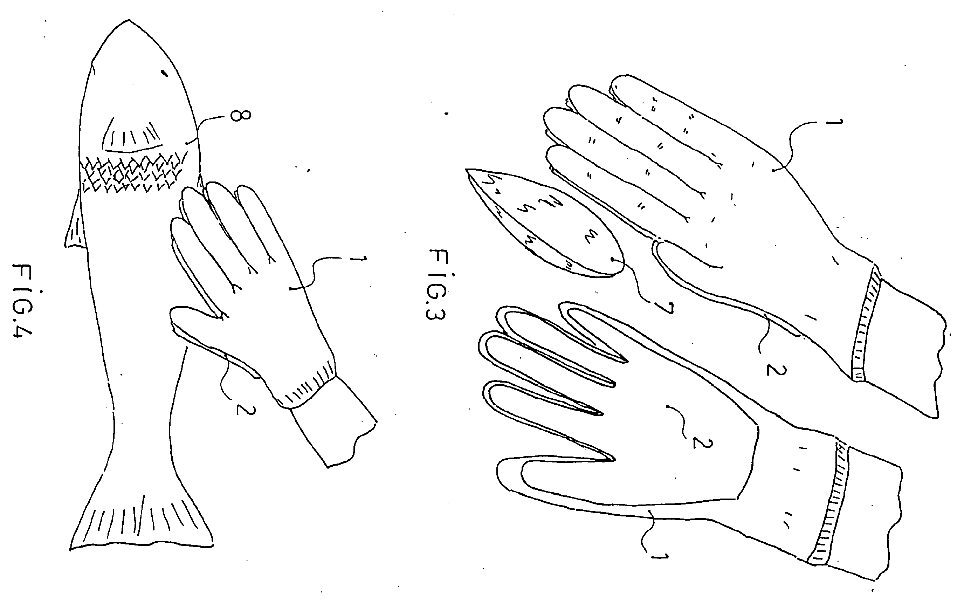

In the art for the cleaning of the fish and of the mussels different apparatuses and tools are known. These apparatuses and tools able to prepare these ichthyo products for the following cooking and for the food preparations. In particular for the mussels machinery are known that, in different ways, actuate the cleaning of the outside part taking off the drosses. These machinery, the use of which is justified only in presence of a big quantity of mussels to clean, often have the problem of a not careful cleaning. For small quantity is normally actuated the manual cleaning with use of knives to scrape the outside part. But this kind of cleaning has very long times, it determines risks of cuts to the hands and it is an operation of small practicalness. Also the elimination of the fish-scales is actuated with metallic tools or knives essentially having the same problems of that incurred for the cleaning of mussels. Aim of the present invention is to create a tool of big practicalness and use immediateness able to avoid damages to the hands and to actuate a quick but careful cleaning of the ichthyo products. However being at first provided for the cleaning of the above cited products, the invented means is with equal practicalness and immediateness to be used for the cleaning and the peeling of vegetables like potatoes, carrots or any vegetables with solid body so like for any product to be cleaned outside for abrasion. The invention, infact, refers to a glove with a particular part applied outside to the palm and to the fingers. This part, thanks to its outside surface strongly abrasive, is able to give the perfect polishing of the mussels and to eliminate the scales to a fish. The part applied to the glove, moreover, does not leave residuals onto the foods such as it does not release chemical substances with the use and it does not loss material or dust from the abrasive part or from the glove. The invented form consisting in a glove with applying the strongly abrasive part, moreover, permits a use practiveness during the working. The abrasive part so created, infact, avoids to slip out of the grasping of the user and it permits to have not residual smells onto the hands, other to preserve the same hands during the workings. The invented means, such as it does not absorb substances onto the abrasive part and not even onto the glove, is to be cleaned after the use simply put it under the water jet or in contact with the water preserving also in this case the hands to residual smalls given to the contact of the skin with the ichthyo products. The invented means consists of a glove 1 in rubber of waterproofed tissue on all or part of the glove. On this glove is applied, with sticking, thermosewing or similar systems, a tissue 2 in cotton with base in polyester shaped in form 3 having the imprint of an opened hand. Onto the tissue 2 are fixed in inseparable way, by means of laser of particular glues , siliceous dust 4, silicon dust 5 and aluminium oxide dust 6. These dusts, mixed and applied in variable proportion between them on the base of the superficial strong requested, form a layer in a sole body with the tissue 2 having flexibility. The surface so obtained, applied to the glove 1 in way so to resist to the forces of the surface to clean, is able to remove any drosses to the mussels 7 with rubbing onto the surfaces to clean. Putting on the glove or a couple of gloves the user is able to clean mussels so like passing the glove with its abrasive part onto the sides of a fish 8 the scales are eliminated. The invention is illustrated in a merely indicative and no limiting way in the drawings of sheets 1 and 2. In sheet 1 figure 2 is frontal view of the invented gloves. Figure 2 is section view of the glove with applied the part strongly abrasive. In sheet 2 are illustrated some examples of use for the cleaning of ichthyo products. In details figure 3 is view of two gloves 1 used for the cleaning of a mussels 7. Figure 4 is view of a glove 1 the abrasive part of which is passed onto a fish 8 for the elimination of the scales .

## Claims

1. Glove for the cleaning of scales of a fish and mussels in general **characterized** to consist of a glove (1), in rubber or waterproofed tissue on all or part of the glove, on which, with sticking, thermosewing or similar systems, a tissue (2) in cotton with base in polyester is applied, shaped in form (3) having the imprint of an opened hand; and that said tissue (2) has an inseparable upper layer, made by means of laser or particular glues, of siliceous dust (4), silicon dust (5) and aluminium oxide dust (6) so to form a sole body with the tissue (2) having flexibility.

2. Glove for the cleaning of scales of a fish and mussels in general, according to claim 1, **characterized** for actuating the cleaning of the ichthyo products by means of the part strongly abrasive formed to the dusts of siliceous (4), silicon (5) and aluminium oxide (6) applied onto the tissue (2).

3. Glove for the cleaning of scales of a fish and mussels in general, according to the previous claims, **characterized in that** it is waterproof in the part of the glove in contact with the ichthyo product together with the abrasive layer (3).

4. Glove for the cleaning of scales of a fish and mussels in general, according to the previous claim, **characterized in that** it does not release chemical substances with the use and it does not loss material or dust from the parts (2, 3) or from the glove (1).

5. Glove for the cleaning of scales of a fish and mussels in general **characterized in that** the tissue (2),in cotton with base in polyester on which the dusts of siliceous (4), of silicon (5) and of aluminium oxide (6) are applied, can be not integral with the waterproofed glove (1).

6. Glove for the cleaning of scales of a fish and mussels in general, according to the previous claim, **characterized in that** it is to be used, with practicalness and immediateness, for the cleaning and the peeling of vegetables like potatoes, carrots or any vegetables with solid body so like for any product to be cleaned outside for abrasion.
